# FASCICULE DE BREVET EUROPEEN

(11) **EP 3 658 404 B1**
(45) Date de publication et mention de la délivrance du brevet: **17.03.2021**
(21) Numéro de dépôt: 18737681.9
(22) Date de dépôt: 19.06.2018
(51) Int. Cl.: B60L 50/50, B60K 6/48, B60W 20/13, B60W 10/02, B60W 10/08, B60W 10/26, B60W 10/30, B60W 20/11, B60K 6/52

(54) **PROCEDE POUR VEHICULE HYBRIDE DE CONTROLE D'UN ALTERNATEUR DE RECHARGE D'UNE BATTERIE D'UN RESEAU DE BORD**
VERFAHREN FÜR EIN HYBRIDFAHRZEUG ZUR STEUERUNG EINER BORDEIGENEN NETZBATTERIEAUFLADENDEN LICHTMASCHINE
METHOD FOR A HYBRID VEHICLE TO CONTROL AN ON-BOARD NETWORK BATTERY RECHARGING ALTERNATOR

(30) Priorité: 26.07.2017 FR 1757080
(43) Date de publication de la demande: 03.06.2020
(73) Titulaire: PSA Automobiles SA, 78300 Poissy (FR)
(72) Inventeur: MILHAU, Yohan, 78630 ORGEVAL (FR); ROCQ, Gaetan, 78125 LA BOISSIERE ECOLE (FR)
(86) Numéro de dépôt international: PCT/FR2018/051455
(87) Numéro de publication internationale: WO 2019/020882

(56) Documents cités:
- EP-A1- 1 975 027
- WO-A1-2017/013843
- FR-A1- 2 981 625
- GB-A- 2 520 556
- US-A1- 2010 117 594

## Description

La présente invention concerne un procédé de contrôle d'un alternateur de charge d'un réseau de bord équipé d'une batterie d'un véhicule automobile hybride, ainsi qu'un véhicule hybride comportant des moyens mettant en oeuvre un tel procédé de contrôle.

Un type de véhicule hybride utilisant l'énergie électrique, appelé hybride parallèle, comporte une première motorisation équipée d'un moteur thermique, et une seconde motorisation comprenant une machine électrique de traction alimentée par des stockeurs d'énergie, qui est reliée aux roues motrices sans passer par un système d'accouplement progressif du moteur thermique.

Les stockeurs d'énergie électrique, appelés par la suite batterie, présentant généralement une basse tension supérieure à 200V, peuvent comporter tous types de technologies, notamment des cellules électrochimiques de stockage d'énergie, ou des capacités électriques.

Le moteur thermique est relié aux roues motrices par une transmission présentant plusieurs rapports de vitesse, comportant en entrée le système d'accouplement progressif, comme un embrayage, ou un convertisseur de couple hydrodynamique qui peut travailler en glissement ou en fermeture avec un embrayage de pontage. Lors des décollages du véhicule à partir de l'arrêt, sur le premier rapport de vitesse, l'embrayage présente un glissement permettant d'adapter la vitesse du véhicule à celle du moteur par l'intermédiaire de ce premier rapport.

Le moteur thermique est relié en permanence à un alternateur délivrant un courant très basse tension à un réseau de bord, comprenant une batterie très basse tension présentant une tension généralement de 12V, qui alimente les différents équipements du véhicule comme les calculateurs électroniques de contrôle de différentes fonctions du véhicule, les systèmes d'assistance à la conduite, notamment pour le freinage ou la stabilité du véhicule, l'éclairage, les essuie-glaces ou la ventilation.

Les équipements alimentés par le réseau de bord fonctionnent de manière très variable suivant les conditions de roulage du véhicule, leurs consommations ne peuvent pas être maîtrisées. En particulier certains équipements comme les calculateurs électroniques de contrôle ou les systèmes d'assistance à la conduite doivent être alimentés en permanence, sans risquer aucune rupture d'alimentation ou baisse de tension trop prononcée qui pourraient les mettre en panne.

De plus certains véhicules hybrides comportent une fonction de démarrage et d'arrêt automatique du moteur thermique, utilisant par exemple l'alternateur relié au moteur thermique, travaillant en moteur en prélevant une énergie sur la batterie du réseau de bord, pour démarrer ce moteur thermique d'une manière qui peut être imprévue, en particulier à la demande du conducteur. Ce type d'alternateur prélève une puissance élevée entraînant une baisse de tension sur le réseau de bord.

Pour ces différentes raisons la batterie du réseau de bord doit être alimentée en permanence par une source d'énergie.

On connaît du document US-A1-2010117594 un procédé de contrôle selon le préambule de la revendication 1.

Par ailleurs un procédé connu d'alimentation du réseau de bord pour un véhicule hybride, présenté notamment par le document WO-A2-2010124831, comporte un alternateur entraîné par le moteur thermique pour recharger la batterie du réseau de bord, ainsi qu'un convertisseur de tension continue DC/DC qui prélève un courant continu basse tension sur la batterie de traction pour recharger avec un courant continu très basse tension la batterie du réseau de bord.

Dans certains cas pour recharger la batterie du réseau de bord on obtient un rendement énergétique global meilleur en utilisant un courant venant de la batterie de traction, puis en le convertissant avec le convertisseur de tension continue, au lieu d'un courant venant de l'alternateur. Dans le cas où la batterie de traction n'est pas assez chargée, il faut alors utiliser la machine électrique de traction en génératrice pour délivrer le courant au convertisseur de tension.

Toutefois avec cette charge utilisant la machine électrique de traction, un problème peut se poser dans le cas d'un roulage du véhicule à très basse vitesse, comprenant un entraînement du véhicule par le moteur thermique avec un glissement de son organe d'accouplement progressif le reliant à la transmission. On obtient alors pour ce type de roulage un rendement énergétique global très diminué à cause des déperditions de ce glissement.

La présente invention a notamment pour but d'éviter ces inconvénients de la technique antérieure.

Elle propose à cet effet un procédé de contrôle d'un alternateur de recharge d'un réseau de bord comprenant une batterie, pour un véhicule automobile hybride équipé d'un moteur thermique entraînant l'alternateur, et entraînant une transmission par un organe d'accouplement progressif, ce véhicule comportant une machine électrique de traction alimentée par une batterie de traction, qui délivre un couple sur les roues motrices sans passer par l'organe d'accouplement, et comportant un convertisseur de tension rechargeant la batterie du réseau de bord à partir de la batterie de traction, ce procédé étant remarquable en ce que dans le cas où une recharge de la batterie du réseau de bord est nécessaire, et la batterie de traction est insuffisamment chargée, il autorise un prélèvement par l'alternateur de couple sur le moteur thermique lorsque la vitesse du véhicule est inférieure à un seuil de vitesse, et il interdit ce prélèvement de couple si la vitesse est supérieure à ce seuil et si l'organe d'accouplement est entièrement fermé.

Un avantage de ce procédé de contrôle est que pour une vitesse du véhicule inférieure à un seuil empêchant une fermeture complète de l'organe d'accouplement, pour prendre en compte la vitesse minimum de rotation du moteur thermique ou un niveau de puissance qu'il doit délivrer, on obtient un glissement de cet organe qui donne des déperditions et un mauvais rendement pour l'énergie mécanique transmise.

La machine électrique disposée en aval de l'organe d'accouplement, recevrait avec ce mauvais rendement la puissance nécessaire pour alimenter le convertisseur de tension qui recharge la batterie du réseau de bord. Pour éviter ce fonctionnement on autorise un prélèvement de couple par l'alternateur pour la recharge de la batterie du réseau de bord, qui donne un meilleur rendement.

A l'inverse si l'organe d'accouplement ne glisse pas, étant entièrement fermé, on interdit le prélèvement de couple par l'alternateur pour imposer une génération de courant par la machine électrique de traction, ce qui donne un meilleur rendement énergétique global.

Le procédé de contrôle suivant l'invention peut de plus comporter une ou plusieurs des caractéristiques suivantes, qui peuvent être combinées entre elles.

Avantageusement, le seuil de vitesses comporte un seuil bas utilisé pour une diminution de la vitesse du véhicule, et un seuil haut supérieur au seuil bas, utilisé pour une augmentation de cette vitesse.

Selon un mode de réalisation, le seuil haut peut être égal au seuil bas auquel on ajoute une constante.

En particulier, le seuil de vitesse peut correspondre à une vitesse du véhicule, ou à une vitesse de rotation de la machine électrique.

Avantageusement, une fois passé au-dessus du seuil de vitesse, si l'embrayage ne se ferme pas, alors le procédé applique une temporisation avant d'interdire le prélèvement par l'alternateur de couple sur le moteur thermique. Ceci permet en cas de non fermeture de l'embrayage, de forcer cette interdiction.

En particulier, la temporisation peut être inférieure à cinq secondes.

Avantageusement, le seuil représentatif de la vitesse du véhicule, ou une temporisation avant d'interdire le prélèvement par l'alternateur de couple sur le moteur thermique, constitue une variable dépendant de paramètres de fonctionnement du véhicule.

L'invention a aussi pour objet un véhicule automobile hybride comportant un alternateur de recharge d'une batterie d'un réseau de bord, relié à un moteur thermique entraînant l'alternateur et entraînant une transmission par un organe d'accouplement progressif, et une machine électrique de traction alimentée par une batterie de traction, la machine électrique de traction délivrant un couple sur les roues motrices sans passer par l'organe d'accouplement, et comportant un convertisseur de tension rechargeant la batterie du réseau de bord à partir de la batterie de traction, remarquable en ce qu'il comporte des moyens mettant en oeuvre un procédé de contrôle de l'alternateur comprenant l'une quelconque des caractéristiques précédentes.

En particulier, le véhicule peut comporter une machine électrique de traction avant reliée directement à la transmission.

En particulier, le véhicule peut comporter une machine électrique de traction arrière reliée aux roues arrière motrices du véhicule.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est un schéma d'un véhicule hybride mettant en oeuvre un procédé de contrôle selon l'invention ;
- la figure 2 est un schéma présentant l'architecture de ce véhicule mettant en oeuvre ce procédé de contrôle ; et
- les figures 3, 4 et 5 sont des graphiques présentant le fonctionnement de ce procédé en fonction du temps, comportant deux options complémentaires pour les figures 4 et 5.

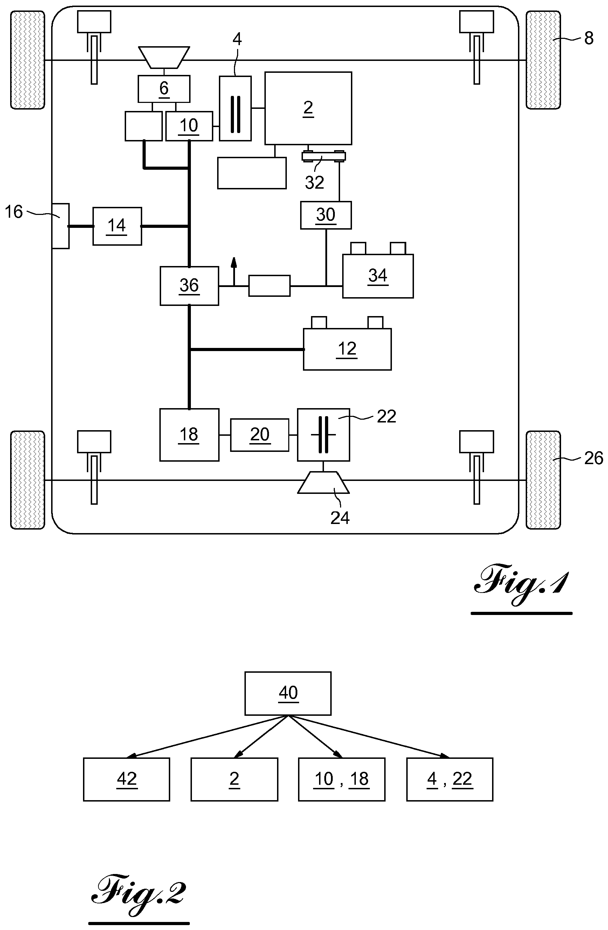

La figure 1 présente un véhicule hybride comportant un moteur thermique 2 entraînant par un embrayage 4 piloté de manière automatique, une transmission 6 présentant différents rapports de vitesse, reliée aux roues avant motrices 8 de ce véhicule.

L'arbre d'entrée de la transmission 6 recevant le mouvement de l'embrayage 4, comporte une machine électrique avant de traction 10 alimentée par une batterie basse tension de traction 12. De cette manière la machine électrique avant 10 peut délivrer un couple sur les roues motrices 8 sans passer par l'embrayage 4, en utilisant les différents rapports de vitesse proposés par la transmission 6.

Un chargeur embarqué 14 peut être relié par une prise extérieure 16 à un réseau de distribution d'électricité, pour recharger la batterie de traction 12 quand le véhicule est à l'arrêt. La batterie de traction 12 présente une basse tension, qui peut être par exemple de 220 ou 300V.

La batterie de traction 12 alimente aussi une machine électrique arrière de traction 18 reliée successivement par un réducteur 20 et un système de crabotage 22, à un différentiel arrière 24 répartissant le mouvement vers les roues arrière du véhicule 26.

Un alternateur 30 relié en permanence par une courroie 32 au moteur thermique 2, alimente un réseau de bord 34 comportant une batterie très basse tension. En complément la batterie du réseau de bord 34 peut être chargée par un convertisseur de tension continue DC/DC 36, recevant une énergie électrique de la batterie de traction 12, ou d'une machine électrique avant 10 ou arrière 18 si le niveau d'énergie de cette batterie de traction est insuffisant.

Lors des freinages du véhicule ou d'un relâchement de la pédale d'accélérateur, les machines électriques 10, 18 travaillent en génératrice en délivrant un couple de freinage, pour recharger la batterie de traction 12 et récupérer une énergie.

Un calculateur du groupe motopropulseur relié à un superviseur de surveillance du véhicule, contrôle le fonctionnement de ce groupe motopropulseur pour répondre aux demandes du conducteur tout en optimisant les consommations d'énergie et les émissions de gaz polluants.

La figure 2 présente le superviseur du groupe motopropulseur 40 donnant les consignes générales de pilotage des systèmes électriques du véhicule 42 comprenant l'alternateur 30, le convertisseur de courant continu 36 et les onduleurs de contrôle des machines électriques, et de pilotage du moteur thermique 2, des machines électriques 10, 18, et des organes de couplage comprenant l'embrayage 4 et le système de crabotage 22.

Le superviseur 40 choisit suivant différents paramètres une charge de la batterie du réseau de bord 34 par l'alternateur 30, ou par le convertisseur de courant continu 36. Quand le superviseur 40 autorise une charge par l'alternateur 30, le système électrique 42 va privilégier cette charge si la capacité de l'alternateur est suffisante.

Dans le cas où la puissance délivrée par l'alternateur 30 est insuffisante pour les besoins du réseau de bord, le convertisseur de courant continu 36 peut délivrer une puissance électrique pour l'énergie manquante, ou prendre entièrement le relai à la place de l'alternateur qui ne prélève alors plus de couple sur le moteur thermique 2.

Dans ce dernier cas la batterie basse tension 12 peut être insuffisamment chargée, sans pouvoir alimenter le réseau de bord, en présentant par exemple un niveau de charge inférieure à 10%, une puissance autorisée de décharge très faible inférieure à 10kW, ou une quantité d'énergie limitée inférieure à 1000kJ. Il est alors nécessaire de prélever une énergie sur le moteur thermique 2, par l'alternateur 30 ou par une machine électrique 10, 18.

Pour une charge de la batterie du réseau de bord 34 avec l'alternateur 30, le rendement global de cette recharge dépend de celui de l'alternateur 30. Pour une charge avec une machine électrique 10, 18, ce rendement dépend de la machine électrique utilisée, de la transmission mécanique reliant cette machine au moteur thermique 2, et de celui du convertisseur de tension 36. Dans certains cas on obtient un meilleur rendement avec une énergie électrique produite par une machine électrique 10, 18, comparé à celui de l'alternateur 30.

Dans le cas d'un roulage du véhicule à très basse vitesse, en particulier un roulage sur le premier rapport de la transmission 6, donnant avec la démultiplication de ce rapport une vitesse du moteur thermique 2 inférieure à son régime de ralenti, il faut alors maintenir un certain glissement de l'embrayage 4 pour ne pas caler ce moteur. En variante dans le cas d'un convertisseur de couple hydrodynamique en entrée d'une transmission automatique, il faut aussi laisser un glissement de ce convertisseur.

En particulier la vitesse du véhicule sur le premier rapport correspondant à la vitesse de ralenti du moteur thermique 2, qui est de l'ordre de 750tr/mn, est d'environ 5km/h. Une vitesse inférieure impose un glissement de l'embrayage 4. On définit alors un seuil de vitesse minimum, pouvant correspondre à cette vitesse de ralenti sur le premier rapport de la transmission 6, en-dessous duquel on a un glissement de l'embrayage 4.

Dans le cas d'un prélèvement impératif d'énergie pour alimenter le réseau de bord, le procédé selon l'invention va alors autoriser un prélèvement de couple par l'alternateur 30 sur le moteur thermique 2 lorsque la vitesse du véhicule est inférieure au seuil de vitesse. En effet dans ce cas une énergie venant d'une machine électrique 10, 18 travaillant en génératrice, à partir d'une puissance mécanique passant par l'embrayage 4 en état de glissement, présenterait un mauvais rendement global à cause des dissipations thermiques de cet embrayage.

En complément, le procédé va interdire le prélèvement de couple par l'alternateur 30 si la vitesse du véhicule est supérieure à ce seuil, et si l'embrayage 4 est entièrement fermé. Dans ce cas l'embrayage 4 ne dissipe pas d'énergie, on peut obtenir un meilleur rendement comparé à une charge par l'alternateur 30.

On notera que sur certains véhicules hybrides on ne réalise pas de charge de la batterie du réseau de bord 34 simultanément avec l'alternateur 30 et avec le convertisseur de tension 36, car ce type de charge entraînerait une complexité de pilotage de ces deux éléments ainsi qu'un rendement global fortement réduit.

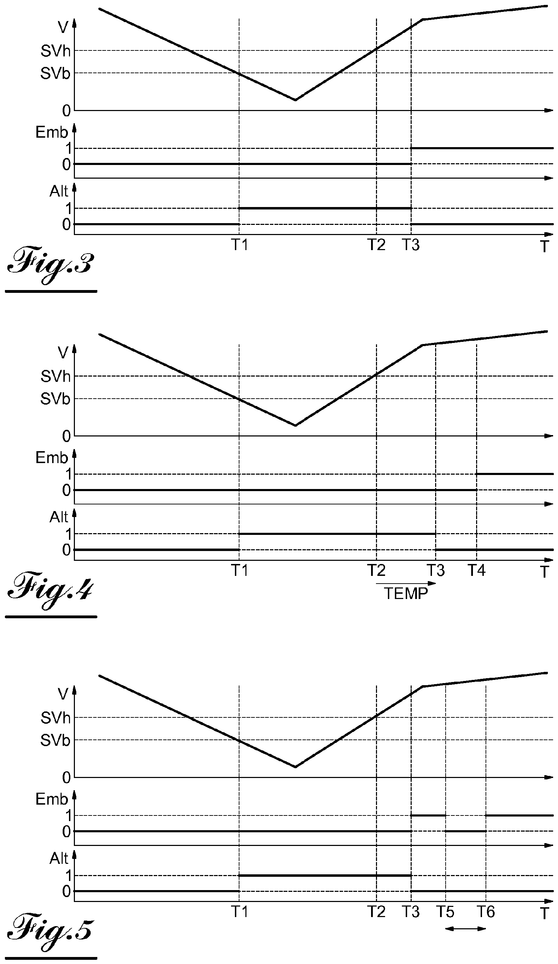

Les figures 3, 4 et 5 présentent en fonction du temps T, pour chaque figure en partant du haut, la vitesse du véhicule V, l'état de l'embrayage Emb compris entre 0 quand un glissement est possible avec l'embrayage partiellement ou entièrement ouvert, et 1 quand l'embrayage est entièrement fermé, et l'autorisation de pilotage de l'alternateur Alt comprenant un état 0 quand ce pilotage est interdit et un état 1 quand il est autorisé.

La figure 3 présente la vitesse du véhicule V qui diminue. A l'instant T1 cette vitesse V descend en dessous d'un seuil de vitesse bas SVb alors que l'état 0 de l'embrayage Emb présente un glissement possible. Le procédé de contrôle met alors l'alternateur Alt dans l'état 1 autorisant son pilotage.

Ensuite la vitesse du véhicule V augmente, à l'instant T2 elle atteint un seuil haut SVh supérieur au seuil de vitesse bas SVb, donnant un glissement impossible de l'embrayage Emb, qui passe à l'état 1 à l'instant suivant T3 très rapproché. Le procédé de contrôle met alors l'alternateur Alt dans son état 0 interdisant son pilotage.

L'écart entre les seuils de vitesse bas SVb et haut SVh constitue une hystérésis évitant une instabilité de fonctionnement.

La figure 4 présente une option complémentaire, dans le cas où l'embrayage est resté à l'état 0 après l'instant T3 avec une vitesse du véhicule V suffisamment élevée, jusqu'à l'instant T4, par exemple dans le cas d'une demande du conducteur pour une forte accélération, nécessitant une montée en régime du moteur thermique 2 avec un glissement de l'embrayage 4.

Le procédé applique alors une temporisation TEMP qui décale dans le temps l'état 0 de l'alternateur Alt pour interdire son pilotage plus tard. La temporisation TEMP est généralement suffisante car l'état de glissement de l'embrayage 4 à une vitesse V suffisamment élevée est toujours limité à un temps très court, généralement inférieur à cinq secondes.

La figure 5 présente le fonctionnement du procédé pendant un changement de rapport de vitesse entre les instants T5 et T6 où l'embrayage Emb à l'état 0 n'est pas complètement fermé, comportant une ouverture complète ou un glissement. Dans ce cas le procédé de contrôle maintient l'alternateur Alt dans son état 0 interdisant son pilotage.

En pratique le seuil de vitesse bas SVb peut être compris entre 5 et 15km/h, et le seuil de vitesse haut SVh entre 8 et 30km/h. Les seuils de vitesse bas SVb et haut SVh peuvent être liés, notamment en ajoutant une constante au seuil de vitesse bas pour obtenir le seuil de vitesse haut.

En variante les seuils de vitesse SVb, SVh peuvent être remplacés par des seuils de régime d'une des machines électriques 10, 18.

Avantageusement ces différents seuils de vitesse SVb, SVh ainsi que la temporisation TEMP, dépendent de plusieurs paramètres, par exemple de la puissance consommée par le réseau de bord, de la puissance autorisée de décharge ou d'énergie contenue dans la batterie basse tension 12, ou du rapport de boite de vitesses engagé ou de consigne.

On peut aussi forcer l'autorisation de pilotage de l'alternateur 30 dans des états très critiques de fonctionnement du véhicule, pour éviter un risque de défaillance proche, correspondant par exemple à une puissance de décharge forte de la batterie très basse tension 34, ou à un niveau d'énergie très bas de cette batterie, indépendamment de l'état de l'embrayage 4 afin d'éviter une défaillance malgré un rendement énergétique réduit.

## Revendications

1. Procédé de contrôle d'un alternateur (30) de recharge d'un réseau de bord (34) comprenant une batterie, pour un véhicule automobile hybride équipé d'un moteur thermique (2) entraînant l'alternateur (30), et entraînant une transmission (6) par un organe d'accouplement progressif (4), ce véhicule comportant une machine électrique de traction (10, 18) alimentée par une batterie de traction (12), qui délivre un couple sur les roues motrices (8, 26) sans passer par l'organe d'accouplement (4), et comportant un convertisseur de tension (36) rechargeant la batterie du réseau de bord (34) à partir de la batterie de traction (12), **caractérisé en ce que** dans le cas où une recharge de la batterie du réseau de bord (34) est nécessaire, et la batterie de traction (12) est insuffisamment chargée, il autorise un prélèvement par l'alternateur (30) de couple sur le moteur thermique (2) lorsque la vitesse du véhicule (V) est inférieure à un seuil de vitesse, et il interdit ce prélèvement de couple si la vitesse (V) est supérieure à ce seuil et si l'organe d'accouplement (4) est entièrement fermé.

2. Procédé de contrôle selon la revendication 1, **caractérisé en ce que** le seuil de vitesses comporte un seuil bas (SVb) utilisé pour une diminution de la vitesse du véhicule (V), et un seuil haut (SVh) supérieur au seuil bas (SVb) utilisé pour une augmentation de cette vitesse (V).

3. Procédé de contrôle selon la revendication 2, **caractérisé en ce que** le seuil haut (SVh) est égal au seuil bas (SVb) auquel on ajoute une constante

4. Procédé de contrôle selon l'une quelconque des revendications précédentes, **caractérisé en ce que** le seuil de vitesse correspond à une vitesse du véhicule (V), ou à une vitesse de rotation de la machine électrique (6, 18).

5. Procédé de contrôle selon l'une quelconque des revendications précédentes, **caractérisé en ce qu'**une fois passé au-dessus du seuil de vitesse, si l'embrayage (4) ne se ferme pas, alors le procédé applique une temporisation (TEMP) avant d'interdire le prélèvement par l'alternateur (30) de couple sur le moteur thermique (2).

6. Procédé de contrôle selon la revendication 5, **caractérisé en ce que** la temporisation (TEMP) est inférieure à cinq secondes.

7. Procédé de contrôle selon l'une quelconque des revendications précédentes, **caractérisé en ce que** le seuil représentatif de la vitesse du véhicule (V), ou une temporisation (TEMP) avant d'interdire le prélèvement par l'alternateur (30) de couple sur le moteur thermique (2), constitue une variable dépendant de paramètres de fonctionnement du véhicule.

8. Véhicule automobile hybride comportant un alternateur (30) de recharge d'une batterie d'un réseau de bord (34), relié à un moteur thermique (2) entraînant l'alternateur (30) et entraînant une transmission (6) par un organe d'accouplement progressif (4), et une machine électrique de traction (10, 18) alimentée par une batterie de traction (12), la machine électrique de traction (10, 18) délivrant un couple sur les roues motrices (8, 26) sans passer par l'organe d'accouplement (4), et comportant un convertisseur de tension (36) rechargeant la batterie du réseau de bord (34) à partir de la batterie de traction (12), **caractérisé en ce qu'**il comporte des moyens mettant en oeuvre un procédé de contrôle de l'alternateur (30) selon l'une quelconque des revendications précédentes.

9. Véhicule automobile selon la revendication 8, **caractérisé en ce qu'**il comporte une machine électrique de traction avant (10) reliée directement à la transmission (6).

10. Véhicule automobile selon la revendication 8 ou 9, **caractérisé en ce qu'**il comporte une machine électrique de traction arrière (18) reliée aux roues motrices arrière (26) du véhicule.

## Patentansprüche

1. Kontrollverfahren zum Steuern einer Lichtmaschine (30) zum Aufladen eines Bordnetzes (34), das eine Batterie umfasst, für ein Hybridkraftfahrzeug, das mit einer Wärmekraftmaschine (2) ausgestattet ist, die die Lichtmaschine (30) antreibt, und zum Antreiben eines Getriebes (6) durch ein progressives Kupplungselement (4), wobei dieses Fahrzeug eine elektrische Traktionsmaschine (10, 18) umfasst, die von einer Traktionsbatterie (12) angetrieben wird , die ein Drehmoment an die Antriebsräder (8, 26) liefert, ohne die Kupplungsvorrichtung zu passieren (4) und umfassend einen Spannungswandler (36), der die Bordnetzwerkbatterie (34) von der Traktionsbatterie (12) auflädt, **gekennzeichnet durch** den Fall, in dem ein Aufladen der Bordnetzwerkbatteriekarte (34) erfolgt. notwendig ist, und die Fahrbatterie (12) ist nicht ausreichend geladen, ermöglicht es der Wechselstromgenerator (30) zu ziehen , ein Drehmoment von der Wärmekraftmaschine (2), wenn die Fahrzeuggeschwindigkeit (V) kleiner ist als eine Drehzahlschwelle, und es verhindert, wobei dies Drehmoment, wenn die Drehzahl (V) ist größer als diese Schwelle und wenn das Kupplungselement (4) vollständig geschlossen ist.

2. Kontrollverfahren nach Anspruch 1, **dadurch gekennzeichnet, dass** die Drehzahlschwelle umfasst eine niedrige Schwelle (SVb) für eine Verringerung der Geschwindigkeit des Fahrzeugs (V) verwendet, und eine hohe Schwelle (SVh) größer als der niedrige Schwellenwert (SVb) verwendet, für eine Erhöhung dieser Geschwindigkeit (V).

3. Kontrollverfahren nach Anspruch 2, **dadurch gekennzeichnet, daß** die hohe Schwelle (SVh) gleich den unteren Schwellenwert (SVb), zu dem eine Konstante hinzugefügt wird,

4. Kontrollverfahren nach einem der vorhergehenden Ansprüche, **dadurch gekennzeichnet, daß** die Drehzahlschwelle entspricht einer Geschwindigkeit des Fahrzeugs (V), oder mit einer Rotationsgeschwindigkeit der elektrischen Maschine (6, 18).

5. Kontrollverfahren nach einem der vorhergehenden Ansprüchen, **dadurch gekennzeichnet, dass** einmal über der vergangene Geschwindigkeitsschwelle, wenn die Kupplung (4) nicht schließt nicht, dann geht das Verfahren wendet eine Verzögerung (TEMP), bevor die Entnahme durch die Lichtmaschine zu unterbinden (30) des Drehmoments von der Wärmekraftmaschine (2).

6. Kontrollverfahren nach Anspruch 5, **dadurch gekennzeichnet, dass** die Zeitverzögerung (TEMP) weniger als fünf Sekunden beträgt.

7. Kontrollverfahren nach einem der vorhergehenden Ansprüche, **dadurch gekennzeichnet, dass** der Schwellenwert für die Geschwindigkeit des Fahrzeugs (V) oder eine Zeitverzögerung (TEMP) repräsentativ ist, bevor die Entnahme des Drehmoments aus der Wärmekraftmaschine durch die Lichtmaschine (30) verhindert wird (2) stellt eine Variable in Abhängigkeit von den Betriebsparametern des Fahrzeugs dar.

8. Hybridkraftfahrzeug, umfassend eine Lichtmaschine (30) zum Aufladen einer Batterie eines Bordnetzes (34), die mit einer Wärmekraftmaschine (2) verbunden ist, die die Lichtmaschine (30) antreibt und ein Getriebe (6) durch eine Vorrichtungskupplung (6) antreibt 4), und eine elektrische Antriebsmaschine (10, 18), angetrieben durch eine Antriebsbatterie (12), der Elektroantriebsmaschine (10, 18) delivr ant ein Drehmoment auf die Antriebsräder (8, 26), ohne durch das Kupplungselement vorbei (4), und mit einem Spannungswandler (36) Wiederaufladen der Batterie von dem Bordnetz (34) von der Traktionsbatterie (12), **dadurch gekennzeichnet, dass** sie Mittel umfasst, ein Verfahren zur Steuerung des Wechselstromgenerators Durchführung (30) nach einer der vorstehenden Ansprüche .

9. Kraftfahrzeug nach Anspruch 8, **dadurch gekennzeichnet, daß** sie eine elektrische front- Rad Antriebsmaschine (10) direkt mit dem Getriebe (6).

10. Kraftfahrzeug nach Anspruch 8 oder 9, **dadurch gekennzeichnet, daß** sie eine elektrische hintere Traktionsmaschine (18), die mit den hinteren Antriebsrad (26) des Fahrzeugs.

## Claims

1. Method of controlling an alternator (30) for recharging an on-board network (34) comprising a battery , for a hybrid motor vehicle equipped with a heat engine (2) driving the alternator (30) , and driving a transmission (6) by a progressive coupling member (4), this vehicle comprising an electric traction machine (10, 18) powered by a traction battery (12), which delivers a torque to the driving wheels (8, 26) without passing through the coupling device (4), and comprising a voltage converter (36) recharging the on-board network battery (34) from the traction battery (12) , **characterized in that** in the case where a recharging of the on-board network battery board (34) is necessary, and the traction battery (12) is insufficiently charged , it allows the alternator (30) to draw torque from the heat engine (2) when the vehicle speed (V) is less than a speed threshold, and it prohibits this taking of torque if the speed (V) is greater than this threshold and if the coupling member (4) is completely closed.

2. Control method according to Claim 1, **characterized in that**
the speed threshold comprises a low threshold (SVb) used for a reduction in the speed of the vehicle (V), and a high threshold (SVh) greater than the low threshold (SVb) used for an increase in this speed (V).

3. Control method according to Claim 2, **characterized in that** the high threshold (SVh) is equal to the low threshold (SVb) to which a constant is added

4. Control method according to any one of the preceding claims, **characterized in that** the speed threshold corresponds to a speed of the vehicle (V), or to a speed of rotation of the electric machine (6, 18).

5. Control method according to any one of the preceding claims, **characterized in that** once passed above the speed threshold, if the clutch (4) does not close, then the method applies a delay (TEMP) before to prohibit the taking by the alternator (30) of torque from the heat engine (2).

6. Control method according to Claim 5, **characterized in that** the time delay (TEMP) is less than five seconds.

7. Control method according to any one of the preceding claims, **characterized in that** the threshold representative of the speed of the vehicle (V), or a time delay (TEMP) before prohibiting the extraction by the alternator (30) of torque from the heat engine (2) constitutes a variable depending on the operating parameters of the vehicle.

8. Hybrid motor vehicle comprising an alternator (30) for recharging a battery of an on-board network (34), connected to a heat engine (2) driving the alternator (30) and driving a transmission (6) by a device progressive coupling (4), and an electric traction machine (10, 18) driven by a traction battery (12) , the electric traction machine (10, 18) delivr ant a torque on the driving wheels (8, 26) without passing through the coupling member (4) , and comprising a voltage converter (36) recharging the battery of the on-board network (34) from the traction battery (12), **characterized in that** it comprises means implementing a method for controlling the alternator (30) according to any one of the preceding claims.

9. Motor vehicle according to Claim 8, **characterized in that** it comprises an electric front- wheel drive machine (10) connected directly to the transmission (6).

10. Motor vehicle according to Claim 8 or 9, **characterized in that** it comprises an electric rear traction machine (18) connected to the rear driving wheels (26) of the vehicle.
